# FASCICULE DE BREVET EUROPEEN

(11) **EP 1 939 410 B1**
(45) Date de publication et mention de la délivrance du brevet: **19.08.2009**
(21) Numéro de dépôt: 06127257.1
(22) Date de dépôt: 27.12.2006
(51) Int. Cl.: F01D 25/24, F01D 9/04, F16L 23/036

(54) **Système de raccordement**
Verbindungssystem
Connection system

(43) Date de publication de la demande: 02.07.2008
(73) Titulaire: Techspace Aero, 4041 Milmort - Herstal (BE)
(72) Inventeur: Cortequisse, Jean-François, 3870 Heers (BE); De Tessieres, Sébastien, 24380 Chalagnac (FR)
(74) Mandataire: David, Daniel

(56) Documents cités:
- EP-A- 1 106 893
- EP-A- 1 314 854
- CH-A- 273 204
- GB-A- 2 184 186
- US-A- 4 478 439

## Description

La présente invention se rapporte à un système de raccordement de deux éléments sensiblement tubulaires, en particulier deux viroles d'un carter de compresseur axial.

Les compresseurs axiaux, par exemple dans des turboréacteurs, sont généralement formés par une succession axiale de rotors et stators. Chaque rotor est un ensemble d'aubes rotatives fixées à l'arbre d'entraînement du compresseur. Chaque stator est un ensemble d'aubes de redressement stationnaires fixées au carter du compresseur. Chaque rotor est suivi d'un stator, de manière à former un étage de compresseur.

Un turboréacteur peut comporter une pluralité de compresseurs successifs, par exemple un compresseur basse pression monté devant un compresseur haute pression, où chacun comporte un arbre d'entraînement différent.

Généralement, un carter de compresseur axial est formé par une série d'éléments sensiblement tubulaires, ou viroles, raccordés successivement. Chaque virole entoure généralement un étage de compresseur, c'est-à-dire un rotor et un stator. Une virole comportera donc normalement l'ensemble d'aubes stationnaires formant le stator, ou bien des moyens de fixation desdites aubes stationnaires, ainsi qu'une surface intérieure abradable afin d'éviter un frottement excessif avec les aubes du rotor.

Les paires de viroles successives sont raccordées par des systèmes de raccordement comportant :
a) deux brides, chacune étant sensiblement annulaire et comportant une face proximale destinée à être solidaire d'une des deux viroles successives, et une face distale, et
b) des éléments de fixation pour serrer les faces distales des deux brides l'une contre l'autre, de manière à pouvoir transmettre des efforts axiaux de traction et de compression entre les deux brides.

Le document CH 273204 décrit de telles paires de viroles.

Par face distale, on entend la face plus éloignée du corps de la virole. Par face proximale, celle plus proche du corps de la virole. Dans l'état de la technique, on emploie comme éléments de fixation des boulons traversant des orifices agencés dans les brides. Toutefois cet arrangement présente plusieurs inconvénients :

Dans le cas d'une rupture d'aube de compresseur, des efforts circonférentiels non négligeables viennent s'ajouter aux efforts axiaux et radiaux entre les paires de viroles adjacentes. Ces efforts ont un effet de cisaillement sur les boulons du système de raccordement, ce qui oblige à utiliser un grand nombre de boulons ayant un diamètre considérable pour le raccordement des viroles. Afin de solutionner le problème de l'encombrement des boulons, il est nécessaire de surdimensionner les brides en augmentant le diamètre extérieur.

En plus des inconvénients de coût et poids inhérents à un tel surdimensionnement, l'encombrement radial des brides élargies présente aussi d'autres problèmes. Ainsi, dans de nombreuses applications, cet encombrement rend difficiles les opérations de montage et démontage, à cause d'interférences entre les brides et des éléments externes au compresseur, comme par exemple des capots. En particulier, dans le domaine des turboréacteurs, il peut être souhaitable de pouvoir démonter le compresseur basse pression vers l'arrière pour faciliter la maintenance. Toutefois, si les brides de raccordement des viroles du carter du compresseur basse pression sont trop encombrantes, elles vont buter contre le carter intermédiaire placé généralement à l'arrière du compresseur basse pression et servant à soutenir l'ensemble du turboréacteur.

L'invention a pour but de pallier les inconvénients de l'état de la technique en procurant des éléments de fixation permettant de minimiser l'encombrement radial d'un système de raccordement d'éléments sensiblement tubulaires, et particulièrement de viroles de carter de compresseur axial.

Pour résoudre ce problème, il est prévu suivant l'invention un système de raccordement tel qu'indiqué au début, dans lequel :
Premièrement, une des deux brides est une bride mâle avec un diamètre extérieur déterminé, et l'autre des deux brides est une bride femelle comportant, sur sa face distale, une prolongation axiale avec un diamètre intérieur sensiblement égal ou supérieur au diamètre extérieur de la bride mâle, de façon à ce que ladite bride mâle puisse être introduite dans un espace délimité par ladite prolongation axiale de ladite bride femelle.
Deuxièmement, lesdits moyens de fixation comportent un jonc destiné à être introduit derrière ladite bride mâle dans l'espace délimité par ladite prolongation axiale, et un serre-jonc destiné à exercer une force radiale sur ledit jonc.
Et troisièmement, le jonc est agencé pour être calé par ladite force radiale entre la face proximale de la bride mâle et une surface de ladite prolongation axiale sensiblement opposée à ladite face proximale de la bride mâle, de manière à convertir ladite force radiale en une force sensiblement axiale d'écartement entre ladite surface de la prolongation axiale et la face proximale de la bride mâle, serrant les faces distales des deux brides l'une contre l'autre.

Ces caractéristiques permettent de séparer les efforts axiaux en traction, qui seront transmis par le jonc, des efforts axiaux en compression, qui seront transmis par les faces distales des brides, et des efforts circonférentiels et radiaux. Cette séparation facilite la conception des différents composants du système et leur dimensionnement optimisé pour chacun des efforts à transmettre. Par ailleurs, la section travaillante du jonc peut être très grande, celui-ci pouvant occuper sensiblement tout le périmètre du système d'accouplement, ce qui permet aussi de réduire le diamètre extérieur des brides.

De préférence, ladite prolongation axiale comporte en outre une surface intérieure de centrage de diamètre sensiblement égal au diamètre extérieur de la bride mâle et de préférence ajusté afin d'obtenir un serrage radial déterminé, ladite surface intérieure de centrage étant destinée à coopérer avec la bride mâle lorsque la face distale de celle-ci est serrée contre la face distale de la bride femelle, de manière à limiter le déplacement radial de la bride mâle relativement à la bride femelle. Ceci fournit un moyen de transmission des efforts radiaux simple mais ayant aussi une grande efficacité due à sa grande section travaillante.

De préférence, ledit jonc comporte une pluralité de secteurs séparés afin de faciliter son insertion dans l'espace délimité par la prolongation axiale.

De préférence, le système de raccordement comporte en outre des moyens de connexion positive pour la reprise des efforts circonférentiels entre les brides mâle et femelle, permettant de cette manière d'assurer une transmission efficace des efforts circonférentiels entre les brides mâle et femelle.

De préférence, lesdits moyens de connexion positive comportent un ensemble d'emplacements agencé dans chacune desdites brides mâle et femelle et un ensemble de clavettes agencées pour être logées dans ces emplacements. Ceci fournit des moyens de connexion positive particulièrement simples à mettre en oeuvre et pouvant être parfaitement séparés des efforts autres que ceux circonférentiels.

De préférence, lesdits emplacements agencés dans chacune desdites brides mâle et femelle sont distribués circonférentiellement avec des intervalles correspondant sensiblement aux longueurs desdits secteurs de jonc, et chacun desdits secteurs de jonc est destiné à être introduit dans l'espace délimité par ladite prolongation axiale entre deux clavettes logées dans lesdits emplacements. Ce mode de réalisation permet de limiter le déplacement tangentiel des secteurs de jonc et de bien distribuer les efforts de traction entre tous les secteurs de jonc et les efforts circonférentiels entre toutes les clavettes.

De préférence, ledit serre-jonc comporte au moins un épaulement pour éviter la perte des clavettes en cas de desserrage ou rupture.

De préférence, ledit serre-jonc comporte une surface conique ou inclinée agencée pour coopérer avec ledit jonc de manière à convertir une force sensiblement axiale exercée sur ledit serre-jonc en une force sensiblement radiale sur ledit jonc pour serrer le système de raccordement. Ceci fournit un moyen simple de caler ledit jonc entre lesdites surfaces opposées et relativement inclinées pour serrer le système de raccordement.

Pour faciliter encore plus le calage du jonc et donc le serrage du système de raccordement, lesdits éléments de fixation comportent en outre au moins une tige filetée pour connecter ledit serre-jonc à un élément de support solidaire à un des deux éléments sensiblement tubulaires, tel que la bride femelle ou une troisième bride, et exercer ladite force sensiblement axiale sur ledit serre-jonc de manière à serrer le système de raccordement par rotation de ladite tige filetée par rapport à un filetage complémentaire sur le serre-jonc ou l'élément de support. Comme la tige filetée n'est pas agencée pour transmettre aucun des efforts entre les deux brides, il peut être dimensionné avec une section beaucoup moins importante que celle des boulons de l'état de la technique.

La présente invention se rapporte aussi à un carter de compresseur axial, par exemple de compresseur basse pression d'un turboréacteur ou turbopropulseur, comportant une pluralité de viroles dont au moins deux sont adjacentes et raccordées par un système de raccordement suivant l'invention, ainsi qu'à un procédé d'utilisation d'un tel système de raccordement dans un tel carter. Ceci fournit un carter de compresseur axial à faible encombrement radial et donc plus facilement démontable.

De préférence, au moins une desdites deux viroles adjacentes comporte un stator et/ou une surface intérieure abradable, de manière à intégrer ces éléments du compresseur dans le carter.

Des détails concernant l'invention sont décrits ci-après faisant référence aux dessins.
La figure 1 est une coupe longitudinale d'un système de raccordement suivant l'état de la technique.
La figure 2 est une coupe longitudinale d'un système de raccordement suivant un mode de réalisation de l'invention.
La figure 3 est une coupe transversale d'un détail du même système de raccordement.
La figure 4 est une coupe longitudinale d'un système de raccordement suivant un mode de réalisation alternatif.
La figure 5 est une deuxième coupe longitudinale du même système de raccordement.

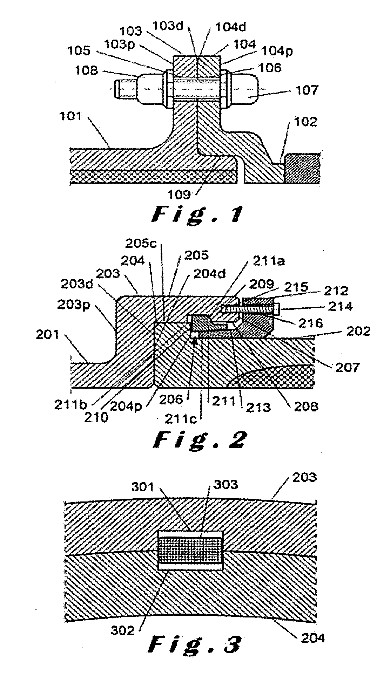

Comme on peut voir dans la figure 1, dans l'état de la technique, chacune des viroles 101 et 102 d'un carter de compresseur basse pression d'un turboréacteur double-flux comporte une bride, respectivement désignée 103 et 104. Chacune de ces brides 103,104 présente une face proximale, respectivement désignée 103p et 104p, et une face distale, respectivement désignée 103d et 104d. Dans chaque bride 103,104, un ensemble d'orifices, respectivement désignés 105 et 106, relient la face proximale 103p,104p à la face distale 103d,104d. Les orifices 105 de la bride 103 sont alignés avec les orifices 106 de la bride 104, de manière à pouvoir y faire passer des vis 107. En serrant ces vis 107 avec des écrous 108, il est donc possible d'établir un raccordement axial entre les viroles 101 et 102.

Tandis que la transmission des efforts radiaux est assurée par l'emboîtement de surfaces de centrage 109 des viroles 101,102, les boulons 107 doivent reprendre, outre la traction axiale, la torsion circonférentielle entre les brides 103,104. Une telle torsion soumet les boulons 107 à des efforts de cisaillement, ce qui force à augmenter leur section travaillante, et donc le diamètre des orifices 105,106 et la largeur des brides 103,104.

Dans le mode de réalisation de l'invention représenté dans la figure 2, la virole 201 comporte une bride femelle 203, tandis que la virole 202 comporte une bride mâle 204. La bride femelle 203 comporte, sur sa face distale 203d, une prolongation axiale 205, avec, à proximité de la face distale 203d, une surface de centrage 205c avec un diamètre intérieur déterminé. La bride mâle 204 a un diamètre extérieur tel qu'elle peut être axialement introduite dans un espace 206 délimité par la prolongation axiale 205, jusqu'à ce que la face distale 204d de la bride mâle 204 butte contre la face distale 203d de la bride femelle 203. Les efforts axiaux en compression entre les viroles 201,202 pourront donc être transmis par contact entre ces faces distales 203d,204d.

Le diamètre extérieur de la bride mâle 204 et le diamètre intérieur de la surface de centrage 205c sont sensiblement égaux et ajustés, de manière a ce que, quand les faces distales 203d,204d des brides femelle et mâle 203,204 sont en contact, la bride mâle 204 soit emboîtée dans la surface de centrage 205c avec un serrage déterminé. Ce serrage radial de la bride mâle 204 sert à transmettre les efforts radiaux entre les viroles 201,202.

Tournant vers la figure 3, chacune des brides femelle et mâle 203,204 comporte des emplacements 301, 302 repartis circonférentiellement et pouvant être alignés afin de recevoir des clavettes 303. Chacune de ces clavettes 303 est agencée avec un serrage latéral déterminé tant dans l'emplacement 301 dans la bride femelle 203 comme dans l'emplacement 302 dans la bride mâle 204. Les clavettes 303 sont agencées de cette manière pour transmettre les efforts circonférentiels en torsion entre les viroles 201,202, pouvant offrir une section travaillante sensiblement supérieure à celle des boulons 107 du système de raccordement précédent illustré dans la fig. 1 sans nécessité d'élargir le diamètre des brides 203,204. Toutefois, des moyens différents de transmission des efforts circonférentiels en torsion entre les viroles 201,202 peuvent être envisagés, comme par exemple des crénelures radiales complémentaires sur les brides 203,204.

Retournant vers la figure 2, la prolongation axiale 205 comporte à son extrême 207 une saillie radiale 208 dirigée vers l'intérieur et formant une surface conique 209 face à l'espace 206. La bride mâle 204 comporte aussi, sur sa face proximale 204p, une surface radiale 210 sensiblement opposée à la surface conique 209. Un jonc 211, comporte des surfaces sensiblement coniques 211a, 211b respectivement destinées à coopérer avec les surfaces 209, 210 pour permettre un déplacement axial et radial du jonc 211 lors de son montage. Le jonc 211 est introduit derrière la bride mâle 204 dans l'espace 205 et calé entre les surfaces 209 et 210. Afin de faciliter cette introduction, le jonc 211 peut comporter une pluralité de sections séparées, chacune destinée à être introduite dans l'arc entre deux clavettes 303.

Le système de raccordement comporte en outre un serre-jonc 212 comportant une surface conique 213 destinée à être glissée sous le jonc 211 calé entre les surfaces 209,210. Le jonc 211 présente une surface intérieure conique 211c du même angle que la surface conique 213. Le serre-jonc 212 est relié par au moins une vis 214 à au moins un orifice 215 dans la bride femelle 203. L'orifice 215 a un filetage intérieur complémentaire du filetage extérieur de la tige 216 de la vis 214. En serrant les vis 214, on pousse donc le serre-jonc 212 axialement dans l'espace 206. À cause de ce déplacement axial, la surface conique 213 du serre-jonc 212, coopérant avec la surface intérieure conique 211c du jonc 211, déplace le jonc 211 radialement vers l'extérieur, le calant plus profondément entre les surfaces 209,210, et donc écartant axialement ces surfaces 209,210 l'une de l'autre. Cet écartement axial des surfaces 209,210 serre plus fortement les faces distales 203d,204d des brides 203,204 l'une contre l'autre. En serrant les vis 214, on peut donc exercer une précontrainte axiale en compression entre les brides 203,204. Une fois le système de raccordement serré avec les vis 214, les efforts axiaux en tension entre les viroles 201,202 seront donc transmis en compression entre les surfaces 209,210 à travers le jonc 211. Les vis 214 ne servant pas directement à la transmission d'aucun des efforts transmis entre les viroles 201,202, elles peuvent être dimensionnées avec une section travaillante bien moins importante que celle des boulons 107 du précédent système de raccordement illustré dans la fig. 1.

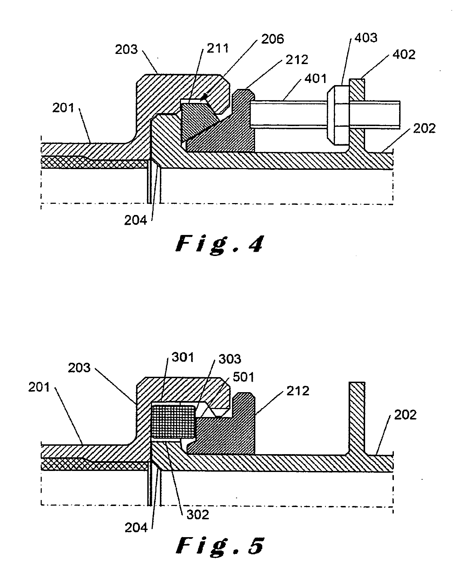

Selon une variante de réalisation représentée avec la figure 4, le serre-jonc 212 peut-être relié par au moins une tige filetée 401, non pas à la bride femelle 203, mais à une troisième bride 402 solidaire de la virole 202, soit par au moins un orifice fileté complémentairement ouvert directement dans la troisième bride 402, soit, comme illustré dans la figure 4, par un écrou à rivets 403. Comme dans le premier mode de réalisation décrit ci-dessus, le système de raccordement peut alors être serré en tournant ladite tige fileté 401 relativement à l'écrou à rivets 403, de manière à faire avancer le serre-jonc 212 dans l'espace 206.

Sur la figure 5 est illustrée une coupe longitudinale du même système de raccordement de la fig. 4 dans un plan radial déplacé angulairement relativement à celui de la figure 4, de manière à montrer une clavette 303 logée dans des emplacements 301,302 agencés respectivement dans la bride femelle 203 et la bride mâle 204 afin de transmettre les efforts circonférentiels entre celles-ci. Le serre-jonc 212 présente un épaulement axial local 501 destiné à éviter la perte de la clavette 303 lorsque le système de raccordement sera desserré.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que descriptif.

### REFERENCES DES FIGURES

- 101: Virole
- 102: Virole
- 103: Bride
- 103p: Face proximale
- 103d: Face distale
- 104: Bride
- 104p: Face proximale
- 104d: Face distale
- 105: Orifice
- 106: Orifice
- 107: Vis
- 108: Écrou
- 109: Surfaces de centrage
- 201: Virole
- 202: Virole
- 203: Bride femelle
- 203p: Face proximale
- 203d: Face distale
- 204: Bride mâle
- 204p: Face proximale
- 204d: Face distale
- 205: Prolongation axiale
- 205c: Surface de centrage
- 206: Espace
- 207: Extrême
- 208: Saillie radiale
- 209: Surface conique
- 210: Surface
- 211: Jonc
- 211a: Surface conique
- 211b: Surface
- 211c: Surface conique inférieure
- 212: Serre-jonc
- 213: Surface conique
- 214: Vis
- 215: Orifice
- 216: Tige filetée
- 301: Emplacement
- 302: Emplacement
- 303: Clavette
- 401: Tige filetée
- 402: Troisième bride
- 403: Écrou à rivets
- 501: Épaulement axial

## Revendications

1. Système de raccordement de deux éléments (201,202) sensiblement tubulaires, en particulier deux viroles d'un carter de compresseur axial, comportant :
a) deux brides (203,204), chacune étant sensiblement annulaire et comportant une face proximale (203p,204p) destinée à être solidaire avec un des deux éléments (203,204), et une face distale (203d,204d), et
b) des éléments de fixation pour serrer les faces distales (203d,204d) des deux brides (203,204) l'une contre l'autre, de manière à pouvoir transmettre des efforts axiaux de traction et de compression entre les deux brides (203,204),
et **caractérisé en ce que**
c) une des deux brides (203,204) est une bride mâle (204) avec un diamètre extérieur déterminé,
d) l'autre des deux brides (203,204) est une bride femelle (203) comportant, sur sa face distale (203d), une prolongation axiale (205) avec un diamètre intérieur égal ou supérieur au diamètre extérieur de la bride mâle (204), de façon à ce que ladite bride mâle (204) puisse être introduite dans un espace (206) délimité par ladite prolongation axiale (205) de ladite bride femelle (203),
e) lesdits moyens de fixation comportent un jonc (211) destiné à être introduit derrière ladite bride mâle (204) dans l'espace (206) délimité par ladite prolongation axiale (205), et un serre-jonc (212) destiné à exercer une force radiale sur ledit jonc (211), et
f) ledit jonc (211) est agencé pour être calé par ladite force radiale entre la face proximale (204p) de la bride mâle (204) et une surface (209) de ladite prolongation axiale (205) sensiblement opposée à ladite face proximale (204p) de la bride mâle (204), de manière à convertir ladite force radiale en une force sensiblement axiale d'écartement entre ladite surface (209) de la prolongation axiale (205) et ladite face proximale (204p) de la bride mâle (204), serrant les faces distales (203d,204d) des deux brides (203,204) l'une contre l'autre.

2. Un système de raccordement selon la revendication 1, où ladite prolongation axiale (205) comporte en outre une surface intérieure de centrage (205c) de diamètre sensiblement égal au diamètre extérieur de la bride mâle (204) et de préférence ajusté afin d'obtenir un serrage radial déterminé, ladite surface intérieure de centrage (205c) étant destinée à coopérer avec la bride mâle (204) lorsque la face distale (204d) de celle-ci est serrée contre la face distale (203d) de la bride femelle (203), de manière à limiter le déplacement radial de la bride mâle (204) relativement à la bride femelle (203).

3. Un système de raccordement selon une des revendications précédentes, où ledit jonc (211) comporte une pluralité de secteurs séparés.

4. Un système de raccordement selon une des revendications précédentes, et comportant en outre des moyens de connexion positive pour la reprise des efforts circonférentiels entre les brides mâle et femelle (204,203).

5. Un système de raccordement selon la revendication 4, où lesdits moyens de connexion positive comportent un ensemble d'emplacements (301,302) agencé dans chacune desdites brides femelle et mâle (203,204) et un ensemble de clavettes (303) agencées pour être logées dans ces emplacements (301,302).

6. Un système de raccordement selon les revendications 3 et 5, où lesdits emplacements (301,302) agencés dans lesdites brides femelle et mâle (203,204) sont distribués circonférentiellement avec des intervalles correspondant sensiblement aux longueurs desdits secteurs du jonc (211), et chacun desdits secteurs du jonc (211) est destiné à être introduit dans l'espace (206) délimité par ladite prolongation axiale (205) entre deux clavettes (303) logées dans lesdits emplacements (301,302).

7. Un système de raccordement selon une des revendications 5 ou 6, où ledit serre-jonc comporte au moins un épaulement pour éviter la perte des clavettes en cas de desserrage ou rupture.

8. Un système de raccordement selon une des revendications précédentes, où ledit serre-jonc (212) comporte une surface conique ou inclinée (213) agencée pour coopérer avec ledit jonc (211) de manière à convertir une force sensiblement axiale exercée sur ledit serre-jonc (212) en une force sensiblement radiale sur ledit jonc (211) pour serrer le système de raccordement.

9. Un système de raccordement selon la revendication 8, où lesdits éléments de fixation comportent en outre au moins une tige fileté (216,401) pour connecter ledit serre-jonc (212) à un élément de support solidaire à un des deux éléments (201,202) sensiblement tubulaires, tel que la bride femelle (203) ou une troisième bride (402), et exercer ladite force sensiblement axiale sur ledit serre-jonc (212) de manière à serrer le système de raccordement par rotation de ladite tige filetée (216,401) par rapport à un filetage complémentaire sur le serre-jonc (212) ou l'élément de support.

10. Un carter de compresseur axial, par exemple d'un compresseur basse pression d'un turboréacteur ou turbopropulseur, comportant une pluralité de viroles (201,202) dont au moins deux sont adjacentes et raccordées par un système de raccordement selon une des revendications précédentes.

11. Un carter de compresseur axial selon la revendication 10, où au moins une desdites deux viroles adjacentes (201,202) comporte un stator et/ou une surface intérieure abradable.

12. Utilisation d'un système de raccordement selon l'une des revendications 1 à 9 pour raccorder au moins deux viroles adjacentes (201,202) d'un carter de compresseur axial, par exemple de compresseur basse pression d'un turboréacteur ou turbopropulseur.

13. Utilisation selon la revendication 12, où au moins une desdites deux viroles adjacentes (201,202) comporte un stator et/ou une surface intérieure abradable.

## Claims

1. A connecting system for connecting two substantially tubular members (201, 202), in particular, two ferrules of an axial compressor case, comprising :
a) two flanges (203, 204), each being substantially annular and comprising a proximal face (203p, 204p) intended to be integral with one of both members (203, 204) and a distal face, and
b) securing members for pressing the distal faces (203d, 204d) of both flanges (203, 204) one against the other, so as to be able to transmit tensile and compression axial stresses between both flanges
and **characterized in that**
c) one of both flanges is a male flange (204) with a determined external diameter,
d) the other of both flanges is a female flange (203) comprising, on the distal face (203d) thereof, an axial extension (205) with an internal diameter equal to or higher than the external diameter of the male flange, such that said male flange (204) could be introduced into a space bound by said axial extension of said female flange (203),
e) said securing means comprise a trim (211) intended for being introduced behind said male flange (204) into the space (206) bound by said axial extension (205), and a trim-clamping element (212) intended to exert a radial force on said trim (24) and
f) said trim (211) is arranged so as to be clamped by said radial force between the proximal face (204p) of the male flange and a surface (209) of said axial extension substantially opposite said proximal face (204p) of the male flange (204), so as to convert said radial force into a substantially axial spreading force between said axial extension surface and said proximal face (204p) of the male flange (204), by clamping distal faces (203d, 204d) of both flanges (203, 204) one against the other.

2. A connecting system, according to claim 1, wherein said axial extension (205) further comprises an internal centering surface (205c) with a diameter substantially equal to the external diameter of the male flange (204) and preferably adjusted so as to obtain a determined radial clamping, said centering internal surface (205c) being intended to cooperate with the male flange (204) when the distal face (204d) of the latter is clamped against the distal face (203d) of the female flange, so as to limit the radial shift of the male flange relative to the female flange.

3. A connecting system according to claim 1, wherein said trim (211) comprises a plurality of separated sectors.

4. A connecting system according to claim 1, and further comprising positive connection means for ensuring circumferential stresses between the male and female flanges (204, 203).

5. A connecting system according to claim 4, wherein said positive connection means comprise a set of locations (301, 302) provided in each of said female and male flanges (203, 204) and a set of keys (303) provided for being housed in such locations (301, 302).

6. A connecting system according to claims 3 and 5, wherein said locations (301, 302) provided in said female and male flanges (203, 204) are circumferentially distributed with gaps substantially corresponding to the lengths of said trim sectors, and each of said trim (24) sectors is intended to be introduced into the space (206) bound by said axial extension (205) between two keys (303) housed in said locations (301, 302).

7. A connecting system according to any one of claims 5 or 6, wherein said trim-clamping element comprises at least one shoulder for preventing the keys to be lost, should some loosening or break occur.

8. A connecting system according to claim 1, wherein said trim-clamping (212) element comprises a tapered or tilted surface (211) provided for cooperating with said trim (211) so as to convert a substantially axial force exerted on said trim-clamping (212) element into a substantially radial force on said trim for clamping the connecting system.

9. A connecting system according to claim 8, wherein said securing members further comprise a threaded stem (216, 401) for connecting said trim-clamping (212) element to a support member integral with one of both substantially tubular members (201, 202), such as the female flange or a third flange (402), and exert said substantially axial force on saidtrim-clamping element (212) so as to clamp the connecting system through rotation of said threaded (216, 401) stem relative to a complementary thread on the trim-clamping element (212) or the supporting member.

10. An axial compressor case, for example of a low pressure compressor of a turbojet or a turboprop, comprising a plurality of ferrules (201, 202), two of which are adjacent and connected by a connecting system according to claim 1.

11. An axial compressor case according to claim 10, wherein at least one of said two adjacent ferrules (201, 202) comprises a stator and/or an abradable inner surface.

12. The use of a connecting system according to claim 1 for connecting at least two adjacent ferrules (201, 202) of an axial compressor case, for example, a low pressure compressor of a turbojet or a turboprop.

13. The use according to claim 12, wherein at least one of said two adjacent ferrules (201, 202) comprises a stator and/or an abradable inner surface.

## Patentansprüche

1. System zum Verbinden von zwei im Wesentlichen röhrenförmigen Elementen (201, 202), insbesondere von zwei Rohrringen eines Axialverdichtergehäuses, umfassend:
a) zwei Flansche (203, 204), die jeweils im Wesentlichen ringförmig sind und eine Proximalseite (203p, 204p), die dazu gedacht ist, mit einem der beiden Elemente (203, 204) fest verbunden zu sein, und eine Distalseite (203d, 204) aufweisen, und
b) Befestigungselemente, um die Distalseiten (203d, 204d) der beiden Flansche (203, 204) gegeneinander zu verklemmen, um axiale Zug- und Druckkräfte zwischen den beiden Flanschen (203, 204) übertragen zu können,
und **dadurch gekennzeichnet, dass**
c) einer der beiden Flansche (203, 204) ein Flansch mit Vorsprung (204) mit einem bestimmten Außendurchmesser ist,
d) der andere der beiden Flansche (203, 204) ein Flansch mit Rücksprung (203) ist, der auf seiner Distalseite (203d) eine Axialverlängerung (205) mit einem Innendurchmesser umfasst, der gleich oder größer ist als der Außendurchmesser des Flansches mit Vorsprung (204) ist, so dass der Flansch mit Vorsprung (204) in einen Zwischenraum (206) eingeführt werden kann, der von der Axialverlängerung (205) des Flansches mit Rücksprung (203) begrenzt ist,
e) wobei die Befestigungsmittel einen Sprengring (211) umfassen, der dazu gedacht ist, hinter dem Flansch mit Vorsprung (204) in den Zwischenraum (206), der von der Axialverlängerung (205) begrenzt ist, eingeführt zu werden, und einen Sprengringhalter (212), der dazu gedacht ist, eine Radialkraft auf den Sprengring (211) auszuüben, und
f) wobei der Sprengring (211) angeordnet ist, um durch die Radialkraft zwischen der Proximalseite (204p) des Flansches mit Vorsprung (204) und einer Oberfläche (209) der Axialverlängerung (205) im Wesentlichen gegenüber der Proximalseite (204p) des Flansches mit Vorsprung (204) festgeklemmt zu werden, um die Radialkraft in eine im Wesentlichen axiale Abstandskraft zwischen der Oberfläche (209) der Axialverlängerung (205) und der Proximalseite (204p) des Flansches mit Vorsprung (204) umzuwandeln, wobei die Distalseiten (203d, 204d) der beiden Flansche (203, 204) gegeneinander verklemmt werden.

2. Verbindungssystem nach Anspruch 1, wobei die Axialverlängerung (205) ferner eine innere Zentrierfläche (205c) umfasst mit einem Durchmesser, der im Wesentlichen gleich dem Außendurchmesser des Flansches mit Vorsprung (204) ist und bevorzugt angepasst ist, um eine bestimmte radiale Verklemmung zu erzielen, wobei die innere Zentrierfläche (205c) dazu gedacht ist, mit dem Flansch mit Vorsprung (204) zusammenzuwirken, wenn die Distalseite (204d) desselben gegen die Distalseite (203d) des Flansches mit Rücksprung (203) verklemmt wird, um die Radialbewegung des Flansches mit Vorsprung (204) im Verhältnis zu dem Flansch mit Rücksprung (203) zu beschränken.

3. Verbindungssystem nach einem der vorhergehenden Ansprüche, wobei der Sprengring (211) eine Vielzahl von getrennten Sektoren umfasst.

4. Verbindungssystem nach einem der vorhergehenden Ansprüche und ferner umfassend Formschlussmittel für die Wiederaufnahme der Umfangskräfte zwischen den Flanschen mit Vorsprung und mit Rücksprung (204, 203).

5. Verbindungssystem nach Anspruch 4, wobei die Formschlussmittel eine Gruppe von Einbaustellen (301, 302) umfassen, die in jedem der Flansche mit Rücksprung und mit Vorsprung (203, 204) angeordnet sind, und eine Gruppe von Nutkeilen (303), die angeordnet sind, um in diesen Einbaustellen (301, 302) untergebracht zu werden.

6. Verbindungssystem nach Anspruch 3 und 5, wobei die Einbaustellen (301, 302), die in den Flanschen mit Rücksprung und mit Vorsprung (203, 204) angeordnet sind, umfangsmäßig in Abständen verteilt sind, die im Wesentlichen den Längen der Sektoren des Sprengrings (211) entsprechen, und jeder der Sektoren des Sprengrings (211) dazu gedacht ist, in den Zwischenraum (206) eingeführt zu werden, der von der Axialverlängerung (205) zwischen zwei Nutkeilen (303) begrenzt wird, die in den Einbaustellen (301, 302) untergebracht sind.

7. Verbindungssystem nach einem der Ansprüche 5 oder 6, wobei der Sprengringhalter mindestens eine Schulter umfasst, um den Verlust der Nutkeile bei Lockerung oder Abreißen zu vermeiden.

8. Verbindungssystem nach einem der vorhergehenden Ansprüche, wobei der Sprengringhalter (212) eine kegelförmige oder geneigte Oberfläche (213) umfasst, die angeordnet ist, um mit dem Sprengring (211) zusammenzuwirken, um eine im Wesentlichen axiale Kraft, die auf den Sprengringhalter (212) ausgeübt wird, in eine im Wesentlichen radiale Kraft auf den Sprengring (211) umzuwandeln, um das Verbindungssystem zu verklemmen.

9. Verbindungssystem nach Anspruch 8, wobei die Befestigungselemente ferner mindestens einen Gewindestift (216, 401) umfassen, um den Sprengringhalter (212) mit einem Stützelement zu verbinden, das mit einem der beiden im Wesentlichen röhrenförmigen Elemente (201, 202) fest verbunden ist, wie etwa dem Flansch mit Rücksprung (203) oder einem dritten Flansch (402), und um die im Wesentlichen axiale Kraft auf den Sprengringhalter (212) auszuüben, um das Verbindungssystem durch Drehung des Gewindestifts (216, 401) im Verhältnis zu einem passenden Gewinde auf dem Sprengringhalter (212) oder dem Stützelement festzuklemmen.

10. Axialverdichtergehäuse, z.B. eines Niederdruckverdichters eines Turbinenluftstrahltriebwerks oder Propellertriebwerks, umfassend eine Vielzahl von Rohrringen (201, 202), von denen mindestens zwei nebeneinander liegen und über ein Verbindungssystem nach einem der vorhergehenden Ansprüche verbunden sind.

11. Axialverdichtergehäuse nach Anspruch 10, wobei mindestens eine der beiden nebeneinander liegenden Rohrringe (201, 202) einen Ständer und/oder eine abreibfähige innere Oberfläche umfasst.

12. Verwendung eines Verbindungssystems nach einem der Ansprüche 1 bis 9, um mindestens zwei nebeneinander liegende Rohrringe (201, 202) eines Axialverdichtergehäuses, z.B. eines Niederdruckverdichters eines Turbinenluftstrahltriebwerks oder Propellertriebwerks zu verbinden.

13. Verwendung nach Anspruch 12, wobei mindestens einer der beiden nebeneinander liegenden Rohrringe (201, 202) einen Ständer und/oder eine abreibfähige innere Oberfläche umfasst.
